# EUROPEAN PATENT APPLICATION

(11) **EP 4 006 789 A1**
(43) Date of publication of application: **01.06.2022**
(21) Application number: 20844326.7
(22) Date of filing: 10.07.2020
(51) Int. Cl.: G06N 20/00

(54) **CONVERSION DEVICE, CONVERSION METHOD, PROGRAM, AND INFORMATION RECORDING MEDIUM**

(30) Priority: 25.07.2019 JP 2019136728
(71) Applicant: RIKEN, Wako-shi Saitama 351-0198 (JP)
(72) Inventor: YAMAMOTO, Yoichiro, Wako-shi, Saitama 351-0198 (JP)
(74) Representative: Epping - Hermann - Fischer
(86) International application number: PCT/JP2020/027103
(87) International publication number: WO 2021/015016

(57) **Abstract**

A conversion device (1001) converts a given input vector to a feature vector by means of a conversion model (1101). In order to learn the conversion model (1101), a partitioner (1002) randomly partitions training vectors into groups. On the other hand, a first classifier (1003) classifies feature vectors that are obtained by converting the training vectors with the conversion model (1101), into any one of the groups 12876 by means of a first classification model (1201). Moreover, a first learner (1004) learns the conversion model (1101) and the first classification model (1201) by means of first teacher data including the training vectors and the groups into which the training vectors are respectively partitioned.

## Description

### Technical Field

The present disclosure relates to a conversion device, a conversion method, a program, and an information recording medium that are suitable for learning a conversion model that converts a given vector to a feature vector.

### Background Art

Conventionally, a technology of converting a given input vector to a feature vector has been proposed.

For example, in order to stably learn a network without using a large amount of data with a teacher, a network learning device disclosed in Patent Literature 1 learns a first network for converting an input signal to a first signal, learns a second network for converting the first signal to a second signal, learns a third network for converting the second signal to an output signal, learns the first network as an encode part of a first autoencoder for encoding a training input signal to a first training signal and decoding the signal to the training input signal, and learns the second network by back propagation with a second training signal corresponding to the first training signal as teacher data, and the second training signal is generated by an encode part of a second autoencoder for encoding a third training signal to the second training signal and decoding the signal to the third training signal.

In the technology disclosed in Patent Literature 1, the first network converts an input vector including the input signal to a feature vector including the first signal.

### Citation List

### Patent Literature

Patent Literature 1: Unexamined Japanese Patent Application Publication No. 2018-156451

### Summary of Invention

### Technical Problem

In the above technology, the teacher data is used for learning the network. That is, training vectors of the teacher data belong to any one of classes prepared in advance, and each training vector is given a label indicating a correct answer to each training vector. That is, the label is conceivable as an identification name given to a class to which the training vector belongs.

However, there may be situations where such a label does not exist and only a sample training vector exists. Under such situations, so-called unsupervised learning is required.

Therefore, there is a demand for a technology for learning a conversion model for converting an input vector to a feature vector without knowing a correct answer class to which a training vector belongs.

The feature vector obtained herein is used as input in post-stage processing such as classification and analysis, but in order to proceed the calculation of the post-stage processing at high speed with high accuracy, it is desired that a feature amount has high sparsity, that is, the ratio of the feature vector including elements having a value of 0 is high.

The present disclosure has been made to solve the above problems, and an objective of the present disclosure is to provide a conversion device, a conversion method, a program, and an information recording medium that are suitable for learning a conversion model that converts a given input vector to a feature vector.

### Solution to Problem

A conversion device according to the present disclosure is a conversion device that converts a given input vector to a feature vector by means of a conversion model, and randomly partitions training vectors into groups; classifies feature vectors that are obtained by converting the training vectors with the conversion model, into any one of the groups by means of a first classification model, and learns the conversion model and the first classification model by means of first teacher data including the training vectors and the groups into which the training vectors are respectively partitioned.

### Advantageous Effects of Invention

According to the present disclosure, it is possible to provide a conversion device, a conversion method, a program, and an information recording medium that are suitable for learning a conversion model that converts a given input vector to a feature vector.

### Brief Description of Drawings

FIG. 1 is an explanatory diagram illustrating a basic configuration of a conversion device according an embodiment of the present disclosure;
FIG. 2 is an explanatory diagram illustrating a configuration in which additional elements are added to the conversion device according the embodiment of the present disclosure;
FIG. 3 is a flowchart illustrating a process performed by the basic configuration of the conversion device according the embodiment of the present disclosure; and
FIG. 4 is a flowchart illustrating a process performed by a configuration for performing the classification of the conversion device according the embodiment of the present disclosure.

### Description of Embodiments

Hereinafter, embodiments of the present disclosure will be described. The present embodiment is for illustrative purposes only and does not limit the scope of the present disclosure. Therefore, those skilled in the art can adopt an embodiment in which each element or all elements of the present embodiment are replaced with equivalents ones. Furthermore, elements described in each embodiment may also be appropriately omitted depending on use. In this way, all embodiments configured according to the principle of the present disclosure are included in the scope of the present disclosure.

### Configuration

A conversion device according the present embodiment is typically implemented by a computer that executes a program. The computer is connected to various output devices and input devices, and transmits/receives data to/from these devices.

The program executed by the computer can be distributed and sold by a server to which the computer is communicably connected, or is recorded on a non-transitory information recording medium such as a compact disk read only memory (CD-ROM), a flash memory, and an electrically erasable programmable ROM (EEPROM) and then the information recording medium can also be distributed, sold, and the like.

The program is installed on a non-transitory information recording medium such as a hard disk, a solid state drive, a flash memory, and an EEPROM of the computer. By so doing, an information processing device in the present embodiment is implemented by the computer. In general, a central processing unit (CPU) of the computer reads the program from the information recording medium to a random access memory (RAM) under the control of an operating system (OS) of the computer, and then interprets and executes codes included in the program. However, in an architecture in which the information recording medium can be mapped in a memory space accessible by the CPU, it is not necessary explicitly load the program into a RAM. Note that various information required in the process of executing the program can be temporarily recorded on the RAM.

Moreover, as described above, the computer includes a graphics processing unit (GPU) and desirably includes a GPU for performing various image processing calculations at high speed. By using libraries such as GPU and TensorFlow, it becomes possible to use a learning function and a classification function in various artificial intelligence processes under the control of the CPU.

Note that the information processing device of the present embodiment is not implemented by a general-purpose computer and can also be configured using a dedicated electronic circuit. In this mode, the program can also be used as a material for generating a wiring diagram, a timing chart, and the like of the electronic circuit. In such a mode, an electronic circuit that satisfies specifications specified in the program is configured by a field programmable gate array (FPGA) and an application specific integrated circuit (ASIC), and serves as a dedicated device that performs functions specified in the program, thereby implementing the information processing device of the present embodiment.

Hereinafter, in order to facilitate understanding, a conversion device will be described assuming a mode implemented by a computer that executes a program.

### Basic Configuration of Conversion Device

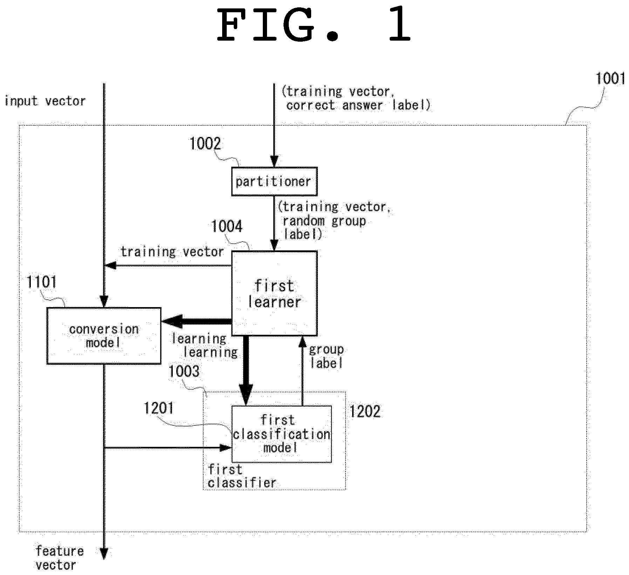

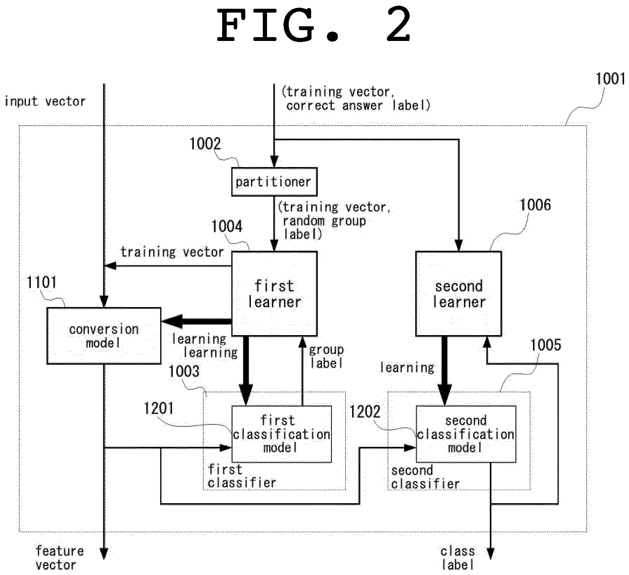

FIG. 1 is an explanatory diagram illustrating a basic configuration of a conversion device according an embodiment of the present disclosure. FIG. 2 is an explanatory diagram illustrating a configuration in which additional elements are added to the conversion device according the embodiment of the present disclosure. Hereinafter, an overview will be described with reference to FIG. 1 and FIG. 2.

As described in FIG. 1 and FIG. 2, a conversion device 1001 includes a partitioner 1002, a first classifier 1003, and a first learner 1004.

Furthermore, as can be understood by comparing FIG. 1 and FIG. 2, the conversion device 1001 may include a second classifier 1005 and a second learner 1006 as components that can be omitted.

As described in FIG. 1 and FIG. 2, the conversion device 1001 converts a given input vector to a feature vector by means of a conversion model 1101.

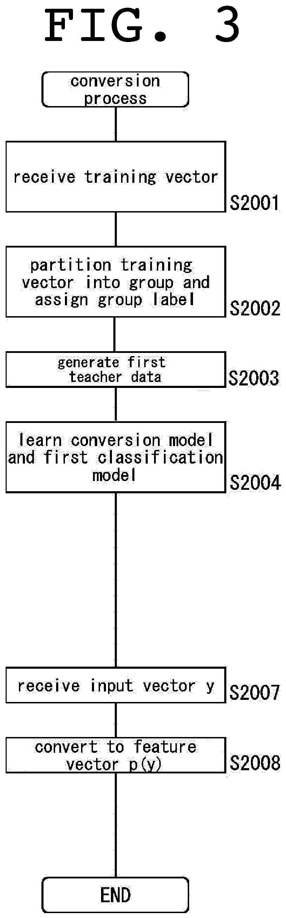

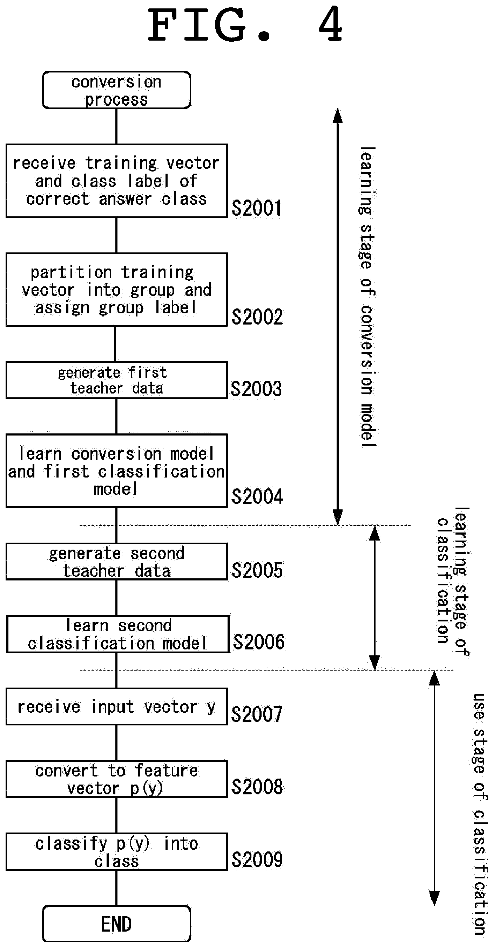

The conversion model 1101 used by the conversion device 1001 needs to be learned in advance. FIG. 3 is a flowchart illustrating a process performed by the basic configuration of the conversion device according the embodiment of the present disclosure. FIG. 4 is a flowchart illustrating a process performed by a configuration for performing the classification of the conversion device according the embodiment of the present disclosure. Hereinafter, description will be made with reference to FIG. 3 and FIG. 4.

As described in FIG. 3 and FIG. 4, a process in the conversion device 1001 can be divided into three stages, that is, a learning stage (steps S2001 to S2004) of the conversion model 1101, a learning stage (steps S2005 and S2006) of classification (second classification model 1202), and a use stage (steps S2007 to S2009) of classification, and the three stages can be performed independently. The learning stage of the conversion model 1101 are performed in both FIG. 1 and FIG. 2, but the learning stage of classification (the second classification model 1202) and the use stage (step S2009) of classification are omitted in FIG. 1.

First, in learning the conversion model 1101, the conversion device 1001 receives training vectors vi, v₂, ..., v_{N} as typical examples of input vectors (step S2001). As an optional mode, as illustrated in FIG. 2 and FIG. 4, class labels c(1), c(2), ..., c(N) of correct answer classes C_{c(1)}, C_{c(2)}, ..., C _{c(N)}, to which the training vectors vi, v₂, ..., v_{N} are to belong, respectively, can also be received from classes C₁, C₂, ..., C_{L}. On the other hand, in the basic configuration illustrated in FIG. 1 and FIG. 3, it is not necessary to receive class labels.

Then, the partitioner 1002 of the conversion device 1001 randomly partitions the training vectors v₁, v₂, ..., v_{N} into groups G₁, G2, ..., G_{M} (step S2002). This partitioning can be implemented by assigning random labels (group labels) g(1), g(2), ..., g(N) that correspond to subscripts of groups to be partitioned, to the training vectors v₁, v₂, ..., v_{N}, respectively. The number M of groups is arbitrary of 2 or more.

Hereinafter, in order to facilitate understanding, it is assumed that a training vector vᵢ is classified into a group G_{g(i)} for each of integers I = 1, 2, ..., N (the training vector vᵢ is given a random label g₍ᵢ₎). That is, the following relationship is established. v₁∈G_{g(1)}, v₂∈G_{g(2)}, ..., v_{N}∈G_{g(N)}

Furthermore, in an optional configuration, it is assumed that the training vector vi belongs to a class C_{c(i)}(the training vector vi is given a correct answer label c₍ᵢ₎). That is, the following relationship is established.
v₁∈C_{c(1)}, v₂∈C_{c}(2), ..., v_{N}∈C_{c(N)}

The conversion device 1001 converts a given input vector x to a feature vector p(x) by means of the conversion model 1101. As the conversion model 1101, various models such as an arbitrary neural network using no convolution can be adopted, in addition to a convolutional neural network (CNN).

Meanwhile, the first classifier 1003 classifies the feature vector p(x) that is obtained by converting the input vector x given to the conversion device 1001, into any one of the groups G₁, G2, ..., G_{M} by means of a first classification model 1201. Substantially, the first classifier 1003 outputs a subscript (label) of a group, into which the given feature vector p(x) is to be classified, to the feature vector p(x). As the first classification model, ridge regression, lasso regression, support vector machine (SVM), random forest, neural network, and the like can be adopted, in addition to general logistic regression.

Then, the first learner 1004 in the conversion device 1001 generates first teacher data (vi, g(1)), (v₂, g(2)), ..., (v_{N}, g(N)) including the training vectors and the groups into which the training vectors are respectively partitioned (step S2003). The first teacher data is data that associates each training vector to the random label (group label).

Then, the first learner 1004 in the conversion device 1001 learns the conversion model 1101 in the conversion device 1001 and the first classification model 1201 in the first classifier 1003 by means of the first teacher data (step S2004).

By so doing, the conversion model 1101 in the conversion device 1001 is learned. Thereafter, when the input vector x is given to the conversion device 1001, the conversion device 1001 outputs the feature vector p(x).

As described above, the following is a configuration omitted in FIG. 1. Therefore, the following will be appropriately described with reference to FIG. 2. That is, in this configuration, the training vectors v₁, v₂, ..., v_{N} belong to the classes C₁, C₂, ..., C_{L}, respectively.

Hereinafter, the learning stage of classification, in which a class to which the input vector given to the conversion device 1001 is to belong is output to the input vector, will be described.

Here, the second classifier 1005 classifies the feature vector p(x) that is obtained by converting the input vector x given to the conversion device 1001, into any one of the classes C₁, C₂, ..., C_{L} by means of a second classification model 1202. Substantially, the second classifier 1005 outputs a subscript (class label) of a class, into which the given feature vector p(x) is to be classified, to the feature vector p(x). As the second classification model 1202, as in the first classification model 1201, ridge regression, lasso regression, support vector machine (SVM), random forest, neural network, and the like can be adopted, in addition to general logistic regression. In addition, a neural network having the same structure can also be adopted in the first classification model 1201 and the second classification model 1202.

Here, the second learner 1006 of the conversion device 1001 generates second teacher data (p(vi), c(1)), (p(v2), c(2)), ..., (p(v_{N}), c(N)) including the feature vectors that are obtained by converting the training vectors by the conversion device 1001, and the classes to which the training vectors respectively belong, by means of the conversion model 1101 learned by the first learner 1004 (step S2005). In learning the conversion model 1101 and the first classification model 1201 in step S2004, the training vector is converted to the feature vector. Consequently, the feature vector p(vi), to which the training vector vi (i=1, 2, ..., N) is converted by the learned conversion model 1101, has already been calculated in the process in step S2004. Here, the calculated feature vector p(vi) and the correct answer class c(i) given to the original training vector vi are used as the second teacher data.

Then, the second learner 1006 learns the second classification model 1202 in the second classifier 1005 (step S2006).

The conversion device 1001 according to the present embodiment has a characteristic that the second classification model 1202 is updated, but the conversion model 1101 is not updated in the learning of the second learner 1006.

Note that (v₁, c(1)), (v₂, c(2)), ..., (v_{N}, c(N)) can also be adopted as the second teacher data. In such a case, it is sufficient if the second classification model 1202 is updated without updating the learned conversion model 1101 in the conversion device 1001.

After the second classification model 1202 is learned, the process can be shifted to the use stage of classification. That is, the stage includes step S2007 in which a new input vector y is given to the conversion device 1001, step S2008 in which the conversion device 1001 converts the new input vector y to a new feature vector p(y) by means of the learned conversion model 1101, and step S2009 in which the second classifier 1005 classifies the new feature vector p(y) into any one of the classes C₁, C₂, ..., C_{L} by obtaining a label for the new feature vector p(y), by means of the learned second classification model 1202. That is, the input vector y is classified into the class in which the feature vector p(y) is classified.

Here, the use stage (steps S2007 to S2009) of classification is performed only once, but may be performed any number of times each time an input vector is given.

Furthermore, as illustrated in FIG. 3, by learning the conversion model in steps S2001 to S2004 and converting the input vector to the feature vector in steps S2007 and S2008, elements of the classification can be omitted. Even in such a case, conversion to the feature vector can be performed any number of times.

According to the inventor's experiments, it can be understood that the classification by the conversion device 1001 of the present embodiment improves the accuracy and sparsity of an obtained feature vector, as compared to a case where (v₁, c(1)), (v₂, c(2)), ..., (v_{N}, c(N)) are used as teacher data in classification using the related autoencoder.

In the related autoencoder, over-learning for teacher data may occur, whereas in the conversion device 1001 of the present embodiment, since teacher data is not referred to when the conversion model 1101 is learned, it is conceivable that over-learning is suppressed.

Hereinafter, various modes of the conversion model 1101 will be described. The conversion model 1101 converts an input vector to a feature vector and encodes information. Therefore, it is general that the dimension of the input vector is lower than that of the feature vector.

Similarly, also in the present conversion device 1001, it is also possible to adopt the conversion model 1101 that converts an input vector to a feature vector by reducing the dimension of the input vector. It is desirable that the dimension of the feature vector is equal to or greater than the number of types of random labels, that is, is equal to or greater than the number M of groups.

Furthermore, in a mode of classifying an input vector into a class, it is desirable that the dimension of the feature vector is equal to or greater than the number of types of correct answer labels, that is, is equal to or greater than the number L of classes.

Regarding the magnitude of the number M of types of random labels and the number L of types of correct answer labels, the performance differs depending on a target. In such a case, it is possible to obtain suitable parameters by prior experiments.

In addition, the probabilities that the partitioner 1002 randomly partitions the training vectors into the groups may be equal to each other or may not match each other. That is, the number of training vectors included in the respective groups may be equal to each other or different from each other. Also for these, it is possible to obtain suitable probability allocations wo by prior experiments.

On the other hand, in the present conversion device 1001, it is known that the sparsity of the feature vector is good. Consequently, the input vector may also be converted to the feature vector by increasing the dimension of the input vector. That is, the number of dimensions of the feature vector is greater than the number of dimensions of the input vector.

The conversion device 1001 according to the present embodiment can be widely used as a substation for the related autoencoder used for obtaining a feature vector.

Note that the autoencoder obtains a feature vector by reducing the dimension of an input vector with an encode part located in the first half of the autoencoder, obtains an output vector by increasing the dimension of the feature vector with a decode part located in the second half thereof, and then performs learning so that a difference between the input vector and the output vector is small. Therefore, when the conversion device 1001 according to the present embodiment is applied to an example in which dimensional encoding is performed by the encode part of the autoencoder, a filter configuration of the encode part can also be used as is for the conversion model 1101 of the conversion device 1001.

### Experimental Example of Conversion Device

For CIFAR-10 that classifies photographs of 10 types of things, an experiment was conducted to compare the autoencoder with the conversion device 1001 according to the present embodiment.

Since a color image of 32 pixelsx32 pixels ×RGB three layers is used as an input image, an input vector is a 3072 dimensional vector.

A filter configuration of the conversion device 1001 is as follows.

```
input_img = Input ((x_train.shape[1], x_train.shape[2], x_train.shape[3]));
 x1 = Conv2D(8, (2,2), strides=(2,2), activation=' relu', padding=' same') (input_img);
 encoded = Flatten() (x1);
 x2 = Reshape((16,16,8), input_shape=(2048,)) (encoded);
 x3 = Conv2D(8,(2,2), strides=(2,2), activation=' relu', padding=' same') (x2);
 x4 = Flatten() (x3);
 last = Dense(L, activation=' softmax') (x4);
```

The conversion device 1001 in the present experiment, an input vector is encoded to 2048 dimension by means of the simplest CNN with eight output layers, kernel size and stride of 2x2, activation function relu, no pooling, and no dropout, so that a feature vector is obtained. That is, of the above, the process until the encoded is obtained corresponds to the conversion model.

Then, the obtained feature vector is made two-dimensional (x2), is processed by the simplest CNN with eight output layers, kernel size and stride of 2x2, activation function relu, no pooling, and no dropout (x3), is fully connected, and then is partitioned into L types of groups by adopting activation function softmax (last). That is, from the encoded to the last via x3 and x4 corresponds to the first classification model 1201.

Furthermore, in the present experiment, the 2048th dimensional feature vector is classified into 10 types of classes by using general logistic regression as the second classification model 1202.

The filter configuration of the encode part of the autoencoder of the related example is the same as the conversion model in the conversion device 1001, and the filter configuration of the decode part is the reverse of the filter configuration of the encode part. Furthermore, after learning the autoencoder, logistic regression was learned in order to classify the feature vector.

Furthermore, when the number of teacher data is set to 50,000, the number of input data given after the learning is set to 10,000, the determination accuracy and sparsity of the feature vector and time (average of 100 trials) required for learning the logistic regression to classify the feature vector were investigated.

By so doing, the following results were obtained in the autoencoder.
Determination accuracy 38.2%
Zero element ratio in feature vector 11.8%
Logistic regression learning time 6745.6 seconds

The following results were obtained for the conversion device 1001 when the number of types of random labels, that is, the number M of groups was set to 2 and the feature vector was classified into two groups having the same number (25,000).
Determination accuracy 44.8%
Zero element ratio in feature vector 55.1%
Logistic regression learning time 643.1 seconds

The following results were obtained for the conversion device 1001 when the number M of groups was set to 2 and the feature vector was classified into two groups having different number of elements (10,000 and 40,000).
Determination accuracy 44.7%
Zero element ratio in feature vector 59.7%
Logistic regression learning time 378.8 seconds

The following results were obtained for the conversion device 1001 when the number L of groups was set to 10 and the feature vector was classified into 10 groups having different number of elements (2,500, 3,000, 3,500, 4,000, 4,500, 5,550, 6,000, 6,500,7,000,7,500).
Determination accuracy 45.2%
Zero element ratio in feature vector 49.7%
Logistic regression learning time 798.4 seconds

As can be understood from the above results, the conversion device 1001 according to the present embodiment is superior in the sparsity of the feature vector and the determination accuracy based on the obtained feature vector. Furthermore, in the conversion device 1001 according to the present embodiment, since the obtained feature vector is sparse, the time required for learning the logistic regression is very short.

In this way, the performance of the conversion device 1001 according to the present embodiment can be confirmed by the experiments on CIFAR-10.

### Conclusion

As described above, the conversion device according to the present embodiment is a conversion device that converts a given input vector to a feature vector by means of a conversion model, and includes a partitioner that randomly partitions training vectors into groups, a first classifier that classifies feature vectors that are obtained by converting the training vectors with the conversion model, into any one of the groups by means of a first classification model, and a first learner that learns the conversion model and the first classification model by means of first teacher data including the training vectors and the groups into which the training vectors are respectively partitioned.

Furthermore, in the conversion device according to the present embodiment, the training vectors belong to the classes, respectively, and the conversion device includes a second classifier that classifies a given vector into any one of the classes by means of a second classification model, and a second learner that learns the second classification model by means of second teacher data including feature vectors that are obtained by converting the training vectors, and the classes to which the training vectors respectively belongs, by means of the learned conversion model.

When a new input vector is given after the second classification model is learned, the conversion device includes that converts the new input vector to a new feature vector by means of the learned conversion model, and the second classifier includes that classifies the new feature vector into any one of the classes by means of the learned second classification model, thereby classifying the new input vector into a class into the new feature vector is classified.

Furthermore, in the conversion device according to the present embodiment, the conversion device that converts the given input vector to the feature vector by reducing a dimension of the given input vector, and a dimension of the feature vector that is greater than the number of the classes.

Furthermore, in the conversion device according to the present embodiment, the conversion device that converts the given input vector to the feature vector by reducing a dimension of the given input vector.

Furthermore, in the conversion device according to the present embodiment, a dimension of the feature vector that is greater than the number of the groups.

Furthermore, in the conversion device according to the present embodiment, the conversion device that converts the given input vector to the feature vector by increasing a dimension of the given input vector.

A conversion method according to the present embodiment is a conversion method performed by a conversion device that converts a given input vector to a feature vector by means of a conversion model, and includes randomly partitioning training vectors into groups, classifying feature vectors that are obtained by converting the training vectors with the conversion model, into any one of the groups by means of a first classification model, and learning the conversion model and the first classification model by means of first teacher data including the training vectors and the groups into which the training vectors are respectively partitioned.

A program according to the present embodiment causes a computer that converts a given input vector to a feature vector by means of a conversion model, to serve as a partitioner that randomly partitions training vectors into groups, a first classifier that classifies feature vectors that are obtained by converting the training vectors with the conversion model, into any one of the groups by means of a first classification model, and a first learner that learns the conversion model and the first classification model by means of first teacher data including the training vectors and the groups into which the training vectors are respectively partitioned.

The program can be recorded on a non-transitory computer readable information recording medium, and then distributed and sold. Furthermore, the program can be distributed and sold via a temporary transmission medium such as a computer communication network.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims priority based on Japanese Patent Application No. 2019-136728 filed on Thursday, July 25, 2019, the contents of the basic application are incorporated herein as long as the laws of the designated country permit.

### Industrial Applicability

According to the present disclosure, it is possible to provide a conversion device, a conversion method, a program, and an information recording medium that are suitable for training a conversion model that converts a given input vector to a feature vector.

### Reference Signs List

1001 Conversion device
1002 Partitioner
1003 First classifier
1004 First learner
1005 Second classifier
1006 Second learner
1101 Conversion model
1201 First classification model
1202 Second classification model

## Claims

1. A conversion device that converts a given input vector to a feature vector by means of a conversion model, the conversion device comprising:
a partitioner that randomly partitions training vectors into groups;
a first classifier that classifies feature vectors that are obtained by converting the training vectors with the conversion model, into any one of the groups by means of a first classification model; and
a first learner that learns the conversion model and the first classification model by means of first teacher data including the training vectors and the groups into which the training vectors are respectively partitioned.

2. The conversion device according to claim 1, wherein
the training vectors belong to the classes, respectively,
the conversion device comprises:
a second classifier that classifies a given vector into any one of the classes by means of a second classification model; and
a second learner that learns the second classification model by means of second teacher data including feature vectors that are obtained by converting the training vectors, and the classes to which the training vectors respectively belong, by means of the learned conversion model,
when a new input vector is given after the second classification model is learned, the conversion device converts the new input vector to a new feature vector by means of the learned conversion model, and the second classifier classifies the new feature vector into any one of the classes by means of the learned second classification model, thereby classifying the new input vector into which a class into the new feature vector is classified.

3. The conversion device according to claim 2, wherein
the conversion device converts the given input vector to the feature vector by reducing a dimension of the given input vector, and
the feature vector has a dimension greater than the number of the classes.

4. The conversion device according to claim 1 or 2, wherein the conversion device converts the given input vector to the feature vector by reducing a dimension of the given input vector.

5. The conversion device according to claim 4, wherein the feature vector has a dimension greater than the number of the groups.

6. The conversion device according to claim 1 or 2, wherein the conversion device converts the given input vector to the feature vector by increasing a dimension of the given input vector.

7. The conversion device according to claim 1 or 2, wherein probabilities that the partitioner randomly partitions the training vectors into the groups, respectively, are not equal to each other.

8. A conversion method executable by a conversion device that converts a given input vector to a feature vector by means of a conversion model, the conversion method comprising:
randomly partitioning training vectors into groups;
classifying feature vectors that are obtained by converting the training vectors with the conversion model, into any one of the groups by means of a first classification model; and
learning the conversion model and the first classification model by means of first teacher data including the training vectors and the groups into which the training vectors are respectively partitioned.

9. A program causing a computer that converts a given input vector to a feature vector by means of a conversion model to serve as:
a partitioner that randomly partitions training vectors into groups;
a first classifier that classifies feature vectors into any one of the groups by means of a first classification model, the feature vectors being obtained by converting the training vectors with the conversion model; and
a first learner that learns the conversion model and the first classification model by means of first teacher data including the training vectors and the groups into which the training vectors are respectively partitioned.

10. A non-transitory computer readable information recording medium storing the program according to claim 9.
